# EUROPÄISCHE PATENTANMELDUNG

(11) **EP 3 557 097 A1**
(43) Veröffentlichungstag der Anmeldung: **23.10.2019**
(21) Anmeldenummer: 19170452.7
(22) Anmeldetag: 23.04.2019
(51) Int. Cl.: F16H 57/08, F16H 48/42

(54) **PLANETENTRÄGER FÜR EIN RÄDERUMLAUFGETRIEBE WIE FÜR EIN PLANETENGETRIEBE UND ENTSPRECHENDES STÜTZVERFAHREN**

(30) Priorität: 20.04.2018 DE 102018109610; 20.04.2018 DE 102018206171
(71) Anmelder: hofer powertrain innovation GmbH, 85748 Garching bei München (DE); ElringKlinger AG, 72581 Dettingen (DE)
(72) Erfinder: Lutz, Mathias, 72070 Tübingen (DE); Kajinski, Christian, 70327 Stuttgart (DE); Modl, Patricia, 72534 Hayingen (DE); Kolasinski, Wojtek, 72770 Ohmenhausen (DE)
(74) Vertreter: Cremer, Christian

(57) **Zusammenfassung**

Die vorliegende Erfindung beschäftigt sich mit einem Planetengetriebe und seinem Planetenträger, bei dem aufgrund einer Mittenankopplung ein erstes Moment und ein zweites Moment, die aus Torsionen der Planetenlagerelemente an dem Planetenträger stammen, eine zumindest teilweise Kompensation der sich dank günstiger Zusammenleitung der Momente gegenseitig aufhebenden Momentenanteile vor deren Ausleitung erfahren. Hierdurch ist es möglich, einen filigraneren, z. B. in Blech gefertigten, Planetenträger für Planetengetriebe mit größeren Drehmomenten zu nutzen.

## Beschreibung

Die vorliegende Erfindung behandelt einen Planetenträger, der Teil eines Räderumlaufgetriebes sein kann.

Des Weiteren behandelt die vorliegende Erfindung eine Technik, wie Torsionen in einem Planetengetriebe verringert werden können.

Mit anderen Worten, die vorliegende Erfindung behandelt einen Planetenträger nach dem Oberbegriff von Anspruch 1 sowie ein Verfahren zur Ausleitung und/oder Verhinderung von Torsionen nach dem Oberbegriff von Anspruch 12.

### Technisches Gebiet

Umlaufrädergetriebe in Gestalt von Planetengetrieben gibt es in vielerlei Ausgestaltungen. Einheitlich bei den unterschiedlichsten Formen von Planetengetrieben ist eine gewisse Anzahl Zahnräder, die als Planeten, auch als Satelliten bezeichnet, über eine oder mehrere Stufen eine Kraft- und/oder Drehmomentübertragung zwischen einem üblicherweise außenliegenden, mit einem Zahninnenkranz ausgestatteten Hohlrad und einem zentral angeordneten Sonnenrad herstellen können sollen. Die Planeten können jeweils wenigstens zweistufig ausgestaltet sein. Solche Planetenzahnräder werden auch als Stufenplanetenräder bezeichnet, vor allem in den Fällen, in denen der Durchmesser des einen Teils des Planetenzahnrades einen anderen, z. B. kleineren, Durchmesser aufweist als ein anderer Teil des Planetenzahnrades. Natürlich ist es möglich, insbesondere bei Planetengetrieben mit Stufenplanetenzahnrädern, mehrere Sonnenräder, insbesondere nebeneinander liegend auf einer zentralen Achse des Getriebes, anzuordnen; genauso ist es möglich, mehrere äußere Hohlräder außerhalb (von einer zentralen Achse aus betrachtet), insbesondere nebeneinanderliegend, anzuordnen.

Die Planeten werden häufig auf Bolzen gelagert, genauer, jedes Planetenzahnrad liegt auf einem eigenen Bolzen. Diese Bolzen werden in einer üblichen Montageweise mit ihren Extremitäten, d. h. mit ihrem linken Ende und mit ihrem rechten Ende, in einem Planetenträger positioniert. In einem Bereich um eine Mitte des jeweiligen Bolzens herum befindet sich das Planetenzahnrad, insbesondere das Stufenplanetenzahnrad. Der Bolzen trägt somit ein Planetenzahnrad, insbesondere ein Stufenplanetenzahnrad. Zugleich bietet der Bolzen eine Drehachse, um die das Zahnrad rotieren kann.

Die Stützstruktur, die insbesondere drehfähig um die zentrale Achse herum sich bewegen kann und die Bolzen bzw. die Planeten trägt, wird üblicherweise mit verschiedenen Namen bedacht, z. B. sind Namen wie Steg, Käfig oder Planetenträger geläufig.

In der FR 2 568 652 A1 (Anmelderin: Equipements Automobiles Marchal; Veröffentlichungstag: 07.02.1986) wird ein Satellitenträger bzw. Planetenträger vorgestellt, der mit zwei transversalen Flanschen, die in der Art eines Gehäuses zusammengefügt sind, aufgebaut ist, wobei wenigstens einer der Flansche longitudinal ausgerichtete Arme besitzt, die sich parallel zu einer Zentralachse erstrecken. Wie bildlich in einer der Figuren der FR 2 568 652 A1 dargestellt ist, erstreckt sich die flache, plattenartige, eine Seite des Planetenträgers bildende Scheibe parallel zur Stirnseite der drei um 120° zueinander versetzt angeordneten, auf Bolzen aufgereihten Planeten, wobei durch quer zu den Scheiben verlaufende Arme, die aus den Scheiben herausgebogen sind, Befestigungen in Richtung auf eine zweite, gleichartige Platte geschaffen sind, sodass beide Platten jeweils als Flansch für die Planeten des Planetengetriebes diese unterstützend tragen können.

Die DE 10 2011 101 073 A1 (Anmelderin: Stöber Antriebstechnik GmbH & Co. KG; Offenlegungstag: 08.11.2012) setzt sich unter anderem mit einer möglichen Weiterentwicklung eines Planetenträgers, wie z. B. dem aus der FR 2 568 652 A1 bekannten, auseinander, der laut Figurenbeschreibung der DE 10 2011 101 073 A1 käfigartig ausgebildet sein soll und Durchtritte für die Planetenräder aufweisen soll. Die Durchtritte sind durch axial verlaufende Arme voneinander getrennt. An einem freien Ende soll der Planetenträger mit einer Ringscheibe versehen sein. Planetenbolzen sind mit ihrem einen Ende in Öffnungen der Ringscheibe gelagert. Mit einem anderen Ende greifen die Planetenbolzen in Öffnungen des Planetenträgers ein. Als Vorteil deklariert die DE 10 2011 101 073 A1, dass der Planetenträger als einstöckige Ausbildung von Gehäuse und Planetenträger ausgestaltet werden kann, wodurch eine erhebliche Einsparung von Bauteilen möglich sein soll. Wie eine Konstruktion eines solchen Planetenträgers aussieht, kann sehr gut den Figuren 2 und 3 der DE 10 2011 101 073 A1 entnommen werden. Die graphisch dargestellten Komponenten wirken, als ob sie massiv, d. h. "aus dem Vollen" herausgefräst worden sind.

Bezüglich möglicher Aufbauten der einzelnen Bauteile und der Anordnung zwischen den einzelnen Komponenten des Planetengetriebes wird auf die zuvor zitierten Druckschriften verwiesen. Statt den Aufbau von Planetengetrieben im Detail zu erklären, sollen mit Benennung der zuvor angeführten Druckschriften deren Beschreibungen zur Darlegung des technischen Gebietes der vorliegenden Erfindung herangezogen werden. Die Offenbarungen der zuvor genannten Druckschriften gelten mit ihren Referenzierungen als vollumfänglich in vorliegende Erfindungsbeschreibung inkorporiert.

### Stand der Technik

Je nach Einsatzgebiet für ein entsprechendes Planetengetriebe, z. B. im Bereich von Antriebsmaschinen für Fahrzeuge, können die Belastungen auf einzelnen Komponenten des jeweiligen Planetengetriebes uneinheitlich sein. Aus diesem Grund überlegt die US 8 647 229 B2 (Anmelderin: The Timken Company; Veröffentlichungstag: 11.02.2014), wie eine gleichmäßigere Lastaufteilung in einem Planetengetriebe möglich sein soll. Als Maßnahme zur Vergleichmäßigung der Lastaufteilung wird in der US 8 647 229 B2 vorgeschlagen, eine nachgiebige Stützstruktur bei den Planetengetrieben zu verwenden, damit eine Last über zwei Reaktionsgetrieberäder verteilt werden kann. Dadurch soll es möglich sein, eine parallele Getriebeanordnung bei einer maximalen Lastbeaufschlagung beizubehalten. Neben Antriebsplanetenzahnrädern werden ein oder mehrere Leerlaufplanetenzahnräder in einem entsprechenden Getriebe verbaut. Hierdurch soll die ungleichmäßige Lastverteilung vermieden werden.

Die Idee, ungleichmäßige Lastverteilungen über Planetengetriebe möglichst gering zu halten, ist vielversprechend. Die in der US 8 647 229 B2 vorgeschlagene Lösung wirkt aber bezüglich der beweglichen, insbesondere drehenden Teile des Getriebes recht aufwändig.

Die DE 11 2005 001 867 B4 (Patentinhaberin: Aisin AW Co., Ltd.; Veröffentlichungstag der Patenterteilung: 31.03.2011) führt ebenfalls aus, dass es bei Planetengetriebeeinheiten mit vier Sätzen aus je einem kurzen Ritzel und einem langen Ritzel an einem Umfang schwierig sei, eine ausreichende Festigkeit des Brückenabschnitts sicherzustellen. Aus diesem Grund stellt die DE 11 2005 001 867 B4 ein Nabenelement vor, das mit Brückenabschnitten ausgestattet sich von einem Flanschabschnitt zu einer Seite der kurzen Ritzel erstrecken solle. Durch eine Erhöhung der Masse im Inneren des Planetengetriebes soll somit die gewünschte Festigkeit und Steifigkeit zur Reduzierung einer Verdrehung des Trägers hergestellt werden.

Die EP 2 072 863 B1 (Patentinhaberinnen: Gamesa Innovation & Technology, S.L. et al.; Veröffentlichungstag der Patenterteilung: 25.04.2012) schlägt vor, einen Planetenträger mit einer Drehplatte auszustatten, wobei die Drehplatte dazu bestimmt sein soll, eine Unterstützung für Planetenwellen darzustellen, welche sich von beiden Seiten der Drehplatte erstrecken. Im Endeffekt handelt es sich somit um zwei getrennte, parallel aufgebaute Getriebe.

Eine ähnliche Konstruktion lässt sich aus der CN 107 061 637 A (Anmelderin: Anhui Science & Technology; Veröffentlichungstag: 18.08.2017) entnehmen. Wie aus der Figur 4 der CN 107 061 637 A abgeleitet werden kann, werden zwei zueinander wohl identische Platten parallel zu einer anders gestalteten Flanschplatte angeordnet, zwischen denen sich einzelne Planeten in drehender Weise aufhalten können. Von der ersten Platte zur zweiten Platte bzw. von der zweiten Platte zu dem Flansch verlaufen jeweils tragende Stifte, auf denen die Planetenzahnräder aufgrund einer die Stifte umrundenden Ausnehmung ruhen können.

Die DE 10 2015 217 198 A1 (Anmelderin: Schaeffler Technologies AG & Co. KG; Offenlegungstag: 09.03.2017) beschäftigt sich mit einem Planetengetriebe mit einem Stufenplanetensatz, für das ein Elektromotor als Antriebseinheit vorgesehen ist. Das Planetengetriebe soll durch solche Stufenplanetensätze realisiert sein, bei dem die Stufenplaneten verschiedene Durchmesser aufweisen sollen.

In der Patentanmeldung US 2010/303 626 A1 (Anmelderin: Vestas Wind Systems A/S; Veröffentlichungstag: 02.12.2010) werden gleichartig wie in der EP 3 284 976 A1 (Anmelderin: Flender GmbH; Veröffentlichungstag: 21.02.2018) ausgehend von einem in der jeweiligen Druckschrift selbständig ausgewählten Stand der Technik mehrere Planetenträgervarianten vorgestellt. Wie aber das Getriebe insgesamt auszugestalten ist, wird in den Dokumenten weniger detailliert erläutert.

Als thematischer Schwerpunkt der US 2010/303 626 A1 ist eventuell anzusehen, dass eine Platte des Planetenträgers weiterzubilden ist, damit diese Platte eine um das Jahr 2010 herum bekannte (angeblich) übliche Platte ersetzen kann, wobei zur Befestigung der Planeten zusätzlich weitere plattenartige Elemente benötigt werden. Bei dieser Plattenkonstruktion dürfte es sich um eine kippbeweglich gelagerte Planetenträgerhalteplatte handeln, die zwischen Eingangsplatte und Planetenträger angesiedelt ist.

Das Dokument EP 3 284 976 A1 zeigt anfänglich in ihrer Figurenbeschreibung einen üblichen Planetenträger und des Weiteren - je nach Zählung - acht oder neun Planetenträger in Schnittzeichnungen, die eingangsseitig (in den Zeichnungen ist jeweils links die Antriebsseite) mit einer Doppelwandkonstruktion zur Bildung einer äußeren Wange und zur Bildung einer inneren Wange gestaltet sind. Die EP 3 284 976 A1 erläutert, dass eine Drehsteifigkeit eingestellt werden könne, indem die Sitze der Planetenachsen in den beiden Wangen eine unter Last auftretende Verdrehung der Planetenträger-Wangen über eine Variation der Torsionssteifigkeit erlauben. In diesem Zusammenhang könne die Konstruktion als Torsionsfeder betrachtet werden.

Die US 3 527 121 A (Inhaberin: General Motors Corporation; Veröffentlichung der Patenterteilung: 08.09.1970) zeigt in zwei Ausführungsbeispielen käfigartige Planetenträger, wobei sich die zwei Ausführungsbeispiele u. a. durch den Übergang einer mittleren Platte auf das zylinderförmige Gehäuse unterscheiden. Die mittlere Platte ist in dem ersten Ausführungsbeispiel beidseitig von dem Eingangs-Sonnenrad auf der einen Seite und von der Ausgangswelle sowie dem Ausgangs-Sonnenrad auf der anderen Seite eingefasst. Von der einen Ebene des eingeleiteten Drehmoments auf die andere Ebene des ausgeleiteten Drehmoments leitet ein sog. "long pinion"-Zahnrad, das mit einem sog. "short pinion"-Zahnrad in Eingriff steht. Das "short pinion"-Zahnrad ist an der mittleren Platte abgestützt. In das "short pinion"-Zahnrad greift das Eingangs-Sonnenrad ein. Die Anordnung ist dabei im Hinblick auf eine Momentenableitung unsymmetrisch ausgebildet.

Die Patentanmeldung US 2004/259 679 A1 (Anmelderin: Hispano Suiza; Veröffentlichungstag: 23.12.2004) stellt - ähnlich wie die US 3 527 121 A - ein käfigartiges Gehäuse vor, das zur Versteifung gegen eine Verdrehung durch Drehmomente im Bereich der Planetenlager Arme aufweist.

Das deutsche Gebrauchsmuster DE 74 01 523 U (Inhaber: Regie Nationale des Usines Renault und Automobiles Peugeot; Bekanntmachungstag: 22.05.1975) beschreibt einen Planetenradträger für ein Planetengetriebe, der durch eine einfache einstückige Herstellung des Planetenradträgers hergestellt werden soll. Dabei sollen im Wesentlichen radial verlaufende Rippen als Verbindungselemente des Planetenradträgers zwischen drei Wänden vorhanden sein. Die Rippen trennen Lagerausnehmungen benachbarter Paare ineinandergreifender Planetenräder voneinander. Eine Art Planetenrad ist ein langes, beide Ebenen des Planetengetriebes überspannendes Planetenrad. Eine zweite Art Planetenrad ist ein kurzes Planetenrad, das vor einer Zwischenwand bzw. Mittenplatte endet. Das lange Planetenrad ist somit nicht an der Zwischenwand abgestützt. Über ein Eingangs-Sonnenrad wird das Planetengetriebe angetrieben und ein Reaktions-Sonnenrad ist das Abtriebszahnrad. Folglich ist ein Planetenträger für ein Planetengetriebe beschrieben, das mit zwei Zahnradebenen ausgestattet ist und eine klassische Verbindung von Sonnenrad zu Sonnenrad bildet. Die Anordnung ist dabei im Hinblick auf eine Momentenableitung unsymmetrisch ausgebildet.

Die zuvor genannten Druckschriften gelten mit ihren Benennungen als vollumfänglich in vorliegende Erfindungsbeschreibung inkorporiert. Hierdurch soll vermieden werden, nicht mehr erneut und wiederholt allgemein bekannte Zusammenhänge zwischen Planeten, ihren eingreifenden sonstigen Zahnrädern und den Lagerungen der Zahnräder und Bauteile des Getriebes zu erörtern, sondern durch Verweis auf die Druckschriften als ebenfalls definiert für vorliegende Erfindung ansehen zu dürfen.

Aus diesen ist abzuleiten, das Planetengetriebe gerne scheibenartig ausgeführt werden.

### Aufgabenstellung

Wünschenswert wäre es, wenn eine Anordnung, insbesondere für Stufenplaneten, bekannt wäre, bei der Torsionen und ungewünschte Quer- bzw. Scherkräfte möglichst gering gehalten werden könnten, idealerweise sogar vermieden werden könnten. Hierzu eine vorteilhafte Konstruktion dem Prinzip nach zu kennen, ist der Wunsch vieler Getriebekonstrukteure.

### Erfindungsbeschreibung

Die erfindungsgemäße Aufgabe wird durch einen Planetenträger nach Anspruch 1 gelöst, ein geeignetes Verfahren zur Ausleitung und/oder Verhinderung von Torsionen lässt sich Anspruch 12 entnehmen. Vorteilhafte Weiterbildungen lassen sich den abhängigen Ansprüchen entnehmen.

Eine beachtenswerte Komponente eines Planetengetriebes ist der Planetenträger selbst.

Wenigstens eines der Planetenzahnräder bzw. wenigstens eine Gruppe bzw. Stufe, gebildet aus Planetenzahnrädern, ist hierbei in einer vorteilhaften Ausgestaltung ein Stufenplanetenzahnrad. Stufenplanetenzahnräder sind solche Zahnräder, die sich aus zwei Zahnrädern mit unterschiedlichen Durchmessern zu einem gestuften Zahnrad zusammensetzen.

Der Planetenträger wird gelegentlich auch als Steg, Satellitenträger oder Käfig bezeichnet, wobei durch jeden Ausdruck spezielle Aspekte in den Vordergrund gerückt werden. Nachfolgend soll von Planetenträger gesprochen werden, weil die Vorrichtung dafür bestimmt ist, Planeten eines Planetengetriebes zu tragen.

Ein Planetenträger ist dafür vorgesehen, Planeten des Planetengetriebes zueinander und in Bezug auf weitere Komponenten des Planetengetriebes örtlich anzuordnen. Der Planetenträger ist somit die Tragstruktur für die Planeten.

Die Planeten selbst des Getriebes können so gestaltet sein, dass das Planetengetriebe ein mehrstufiges Planetengetriebe ist. In einer Ausgestaltung z. B. können mehrere Planeten angeordnet werden, die ineinander eingreifen und dadurch, sozusagen von Planet zu Planet, eine Mehrstufigkeit in dem Getriebe erzeugen. Eine weitere Variante, die auch als Mehrstufigkeit bezeichnet wird, besteht u. a. darin, einen Planeten mit einer Kombination von Zahnrädern zu realisieren, die zueinander unterschiedliche Durchmesser haben. Eine solche Anordnung wird hinlänglich Stufenplanet bzw. Stufenplanetenrad genannt. Besonders vorteilhaft ist es, wenn der Planetenträger so gestaltet ist, dass er Planeten eines mehrstufigen Planetengetriebes tragen kann. Der Planetenträger ist - in dem Fall - als eine Komponente eines mehrstufigen Planetengetriebes vorgesehen.

In einer besonders günstigen Ausgestaltung hat der Planetenträger eine erste Trägerscheibe und eine zweite Trägerscheibe. Die beiden Trägerscheiben sind parallel zueinander ausgerichtet angeordnet. Idealerweise sind die Trägerscheiben runde Trägerscheiben, die z. B. ringförmig ausgestaltet sind. Die Trägerscheiben können äußere Abmessungen aufweisen, die im Wesentlichen gleich sind. So ist es z. B. möglich, die erste Trägerscheibe und die zweite Trägerscheibe mit jeweils einem gleich großen größten Radius zu realisieren. Die Trägerscheiben sind flache, kreisrunde Elemente. Mit anderen Worten, in einer besonders günstigen Ausgestaltung sind die beiden Trägerscheiben kreisringartige Elemente, die einen gleich großen maximalen Radius aufweisen. Dies kann noch weiter geführt werden, indem die Trägerscheiben - im Wesentlichen - die gleichen Massen und die gleichen Massenverteilungen aufweisen. So ist es möglich, die beiden Trägerscheiben im Endeffekt als Gleichteile auszuführen.

Jede Trägerscheibe dient als Befestigungselement für die Aufnahme eines Planetenlagerelements. Ist das Planetengetriebe z. B. mit drei Planeten zu realisieren, so sind idealerweise drei Planetenlagerelemente vorhanden. Solche Planetenlagerelemente können z. B. durch Bolzen realisiert sein. In einer besonders günstigen Ausgestaltung sind die Enden der Bolzen jeweils an einer Trägerscheibe befestigt. D. h., ein Ende eines Bolzens mündet in der einen Trägerscheibe, während das andere Ende des Bolzens in der anderen Trägerscheibe endet. Das erste Ende des Bolzens mündet in der ersten Trägerscheibe. Das zweite Ende des Bolzens endet in der zweiten Trägerscheibe.

Zusätzlich zu den beiden Trägerscheiben gibt es ein Adapterelement. Das Adapterelement kann sich entkoppelt von den Trägerscheiben drehbeweglich in eine andere Richtung als die Trägerscheiben bewegen. Die Trägerscheiben und das Adapterelement können zueinander rotieren. Das Adapterelement ist von den Trägerscheiben entkoppelt. Eine Dreh- oder Rotationsbewegung des Paketes aus Trägerscheiben kann sich anders darstellen als eine Bewegung des Adapterelements.

Vorzugsweise befindet sich das Adapterelement auf der Abtriebsseite des Planetengetriebes. Mit Hilfe des Adapterelements können so z. B. Torsionsmomente abtriebsseitig ausgeleitet bzw. reduziert oder nihiliert werden.

Mit einer Konstruktion, so wie sie zuvor vorgestellt worden ist, aber auch mit einer entsprechenden, ähnlichen Konstruktion, ist es möglich, Torsionen des Planetengetriebes, insbesondere solche, die aus Schrägstellungen von Zahnrädern resultieren, auszuleiten. Das Planetengetriebe hat einen Planetenträger. Der Planetenträger umfasst Trägerscheiben. Der Planetenträger ist z. B. so ausgestaltet, wie er zuvor beschrieben worden ist. Schrägstellungen, die an Elementen entstehen, die für die Übersetzung von Kräften und/oder Drehmomenten zuständig sind, sollten möglichst verringert, wenn nicht sogar vermieden werden, zumindest aber die Auswirkungen der Schrägstellungen in ungewünschte Torsionen. Dies ist z. B. mit Hilfe von Stützstrukturen möglich.

Die Torsion bzw. die Wirkung durch Schrägstellungen in dem Planetengetriebe kann über eine Stützstruktur ausgeleitet werden. Hierfür ist ein Ausleitelement vorgesehen, das z. B. in der Form eines Adapterbleches realisiert sein kann.

Einzelne Momente, insbesondere Torsionsmomente, können über die zwischen den Trägerscheiben angeordneten Stützstrukturen, insbesondere mittig, auf ein Ausleitelement ausgeleitet werden. Ist das Ausleitelement als Adapterblech realisiert, können an dem Ausleitelement weitere Komponenten eines Getriebes oder eines Antriebs befestigt sein. Ein Blech, das die Funktion eines Adapterblechs übernimmt, zeichnet sich unter anderem durch die leichte, insbesondere raumsparende Ausgestaltung aus.

Die Trägerscheiben zusammen mit den Planetenlagerelementen bilden die Halte- und Positionierungsstruktur für die Planetenräder. Hiervon unabhängig gibt es eine zweite Stützstruktur, die insbesondere in dem Ausleitelement ausmündet. Die zweite Stützstruktur kann gegenüber der ersten Stützstruktur eine andere Rotation realisieren.

Es hat sich gezeigt, dass eine Momentenausleitung über den mittleren Bereich zahlreiche Vorteile zeitigt, insbesondere in Hinsicht auf die permanenten und die periodischen Belastungen für den Planetenträger.

Die vorgestellten Planetenträger bieten von sich aus ein Verfahren zur Reduktion der Wirkung von Torsionen, vorrangig durch die Lagerung der Planetenzahnräder an dem Planetenträger in diesen eingeleitet.

Trägerscheiben, die im Vergleich zu der Position der Momentenausleitung außen angeordnet sind, erfahren Momenteneinleitungen, insbesondere über die Bolzen, Stifte, Tragstrukturen oder Planetenlager. Zwischen den Trägerscheiben ist eine Ausleitstruktur vorhanden. Die Ausleitstruktur gibt an ein Adapterelement, wie ein Adapterblech, ein Moment ab. Das Adapterblech kann ein Bauteil bzw. eine Komponente eines weiterführenden Getriebeteils, wie z. B. ein Differentialkäfig, sein. Das abgegebene Moment entspricht einer Resultierenden. Die Resultierende ergibt sich aus den in die Trägerscheiben eingeleiteten Momenten. Durch diese Art der Ausleitung ist es möglich, in einer momentenreduzierenden Art die eingeleiteten Momente wieder abzugeben.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Stufenplanetenräder des Planetengetriebes haben eine Antriebsseite und eine Abtriebsseite. Vorteilhaft ist es bei einer bestimmten Getriebeausgestaltung, die als Getriebe für Drehzahlreduktionen von elektromotorisch angetriebenen Kraftfahrzeugen eingesetzt werden können, jeweils den größeren Planeten auf der Antriebsseite anzusiedeln. Abtriebsseitig ist - in einem solchen Fall - jeweils ein kleinerer Planet angeordnet. Wird von einem Stufenplanetenrad gesprochen, so sind der größere und der kleinere Planet auf einer gemeinsamen Achse angeordnet. Beide Planeten sind zu einem gemeinsamen Zahnrad fest gefügt.

Wird ein Planetengetriebe mit z. B. fünf Planetenrädern oder fünf Stufenplanetenrädern realisiert, so sind hierfür vorzugsweise wenigstens fünf Planetenlagerelemente vorzuhalten. Mit anderen Worten, jedes Planetenrad, insbesondere jedes Stufenplanetenrad, hat sein eigenes Planetenlagerelement. In einer Ausgestaltung entspricht die Anzahl der Planetenräder der Anzahl der Planetenlagerelemente. Die Planetenlagerelemente wiederum lagern in den Trägerscheiben. Es kann auch gesagt werden, die Planetenträgerelemente sind bzw. werden an diesen Trägerscheiben befestigt. Die Planetenlagerelemente werden mit den Trägerscheiben beim Zusammenbauen des Planetengetriebes gefügt.

In einer vorteilhaften Ausgestaltung ist das Adapterelement scheibenartig. Das Adapterelement könnte auch als Platte bezeichnet werden. Das Adapterelement erinnert in einer günstigen Ausgestaltung (grob) an einen großen Suppenteller. Das Adapterelement kann einen äußeren, insbesondere ringförmigen, Kranz haben, wobei der Kranz eine mittige, insbesondere wannenartige, Vertiefung umschließt.

Die bevorzugte Einbaurichtung für die einzelnen Scheiben des Planetenträgers ist eine hochkantige bzw. quer zur Schwerkraft stehende Einbaurichtung (im Sinne einer aufgestellten Einbaurichtung).

Das Adapterelement ist dafür vorgesehen, dass an ihm weitere Elemente des Antriebsstrangs, z. B. weitere Getriebeteile eines Kraftfahrzeugs, angebunden werden.

Ein weiteres, vorteilhafterweise vorhandenes, Bauteil ist eine Abdeckung. Jede der wenigstens zwei vorhandenen Trägerscheiben mag ihre eigene Abdeckung haben. Je Trägerscheibe gibt es - in dieser Ausgestaltungsform - eine Abdeckung.

Die Abdeckung kann als Dreibein, als Vierbein oder als Mehrbein ausgestaltet sein. Zwischen den einzelnen Beinen, z. B. den drei vorhandenen Beinen der Abdeckung, ist ein Freiraum vorgesehen, der auch als Zwischenraum bezeichnet werden kann, durch den einzelne Zahnräder eines Planetengetriebes durchgreifen können. Die Abdeckung ist zelt- oder pavillionartig. Die Abdeckung kann als flaches, an den Seiten heruntergezogenes Gewölbe gestaltet sein. Idealerweise sind die wenigstens zwei Abdeckungen in ihren Abmessungen identisch, sie können sich z. B. anhand ihrer Füge- oder Befestigungselemente voneinander unterscheiden.

Von einer Trägerscheibe zur nächsten Trägerscheibe können Abstandshalter vorhanden sein, die einen Raum für einzelne Ebenen des Planetengetriebes schaffen. In jeder einzelnen Ebene des Planetengetriebes können Planetenzahnradebenen angeordnet sein.

In einer günstigen Weiterbildung hat die erste Trägerscheibe eine erste Abdeckung. Vorteilhaft ist es auch, wenn die zweite Trägerscheibe eine zweite Abdeckung hat. Somit gibt es wenigstens eine erste Abdeckung und eine zweite Abdeckung. Jede dieser Abdeckungen ist zugleich so dimensioniert, dass sie als Abstandshalter einen Abstand zwischen Trägerscheibe und einer Mittelebene schafft.

Der Planetenträger kann Teil eines Planetengetriebes sein, insbesondere eines Planetengetriebes mit Stufenplaneten. Ein solches Stufenplanetengetriebe kann den zuvor beschriebenen Planetenträger umfassen.

Ein weiteres Bauteil des Planetenträgers ist ein Lagersitz. Dieser Lagersitz kann lagersitzhülsenartig gestaltet sein. In einem solchen Fall kann auch von einer Lagersitzhülse gesprochen werden. Die Lagersitzhülse hat z. B. einen sternförmigen Kranz, über den eine Verbindung zu dem die Lagersitzhülse aufnehmenden Adapterelement hergestellt werden kann. Die Lagersitzhülse sitzt vorzugsweise in einem mittleren Bereich des Raums, der für die Aufnahme von Zahnrädern des Getriebes vorgesehen ist (Getrieberaum). Die Lagersitzhülse befindet sich somit zwischen den Planeten.

Der Lagersitz sollte so dimensioniert sein, dass er als drehmomentableitendes Zwischenglied zwischen der Abdeckung (oder den Abdeckungen) und dem Adapterelement ein brückendes Element ist. In diesem Fall werden Torsionen über das Lagerelement ausgeleitet.

Die Abdeckungen und die Trägerscheiben können durch Nasen und Freiräume, wie z. B. Aussparungen oder Fügungsstellen, aufeinander abgestimmt sein. In einem solchen Fall lassen sich Abdeckung und dazugehörige Trägerscheibe durch eine geeignete Fügetechnik verbinden. Durch die Form der Abdeckung, genauso könnte es aber auch durch die Form der Trägerscheibe geschaffen sein, wird ein Hohlraum definiert, der sich so aufspannt, dass darin Zahnräder des Planetengetriebes aufgenommen werden können (Teil des Getrieberaums).

Besonders vorteilhaft ist es, wenn wenigstens einige der Teile, idealerweise alle nachfolgend aufgezählten Teile, als tiefgezogene und eventuell als gestanzte Blechteile ausgeführt sind, nämlich Trägerscheibe, Adapterelement und Abdeckung. In diesem Fall kann der Planetenträger als maschinenfallendes Teil, bei dem nur noch die einzelnen Komponenten miteinander gefügt werden müssen, hergestellt werden. Natürlich können, insbesondere in einer alternativen Ausführungsform, auch einzelne Stellen durch Schweißen gefügt sein.

Die zuvor dargestellten Kombinationen und Ausführungsbeispiele lassen sich auch in zahlreichen weiteren Verbindungen und Kombinationen betrachten.

Nach einem vorteilhaften Aspekt ist es - dank des vorgestellten Planetenträgers - möglich, ungleichmäßige Verteilungen von Momenten und/oder Kräften zwischen insbesondere Stufenplaneten, aber auch nur zwischen einfachen Planeten eines Planetengetriebes durch mittige Ausleitung zu kompensieren (hierbei sei hervorgehoben, dass "mittig" im Sinne von in einem mittleren Bereich zu verstehen ist, nicht aber als genau in der Mitte liegend zu verstehen ist). Zum einen bietet die vorgestellte Konstruktion eine Stützstruktur für die Planeten eines Planetengetriebes. Zum anderen bietet die vorgestellte Konstruktion eine Stützstruktur für das mittige Ausleiten bzw. Kompensieren von Torsionen.

Es kann auch gesagt werden, die Enden der Bolzen oder Stifte bzw. Planetenlagerelemente sind möglichst an ihren Enden torsionsfrei gestaltet. Dadurch, dass versucht wird, eine möglichst geringe Torsion an den Enden der Bolzen, Stifte, Wellen oder sonstigen Planetenlagerelemente zu haben, ist es möglich, die Trägerscheiben als Blechformteile auszugestalten (anstelle von z. B. Gussträgerteilen). Bei Ausrichtung der Bolzen (wobei klar ist, dass mit dem Begriff "Bolzen" auch ähnliche Bauteile wie Stifte, Wellen oder sonstige längliche Planetenlagerelemente gemeint sind) sollte das Spiel zwischen den Bolzen möglichst gering gehalten werden. Mit anderen Worten, die Bolzen sind möglichst spielfrei angeordnet. Werden nun die Lagerstellen der Zahnräder zueinander fluchtend angeordnet, so kann die Torsionsmomenteneinbringung auf den mittleren Bereich konzentriert werden. Wird eine Torsionsmomenteneinbringung auf den mittleren Bereich eines Planetenzahnrades, insbesondere eines Stufenplanentenzahnrades konzentriert, so können die Enden der Bolzen, Wellen oder sonstigen Halteelemente für die Zahnräder, die jeweils an einer der Trägerscheiben befestigt ist, torsionsunbelastet mit der Trägerscheibe gefügt werden. Wie bereits oben angesprochen, kann eine Momentenausleitung über den mittleren Bereich erfolgen. Es kann auch von einem Mittelstegabgriff gesprochen werden, wobei dieser Mittelstegabgriff z. B. durch Abdeckungen gebildet werden kann. Die Abdeckung(en) bzw. die Mittenausleitung(en) kann/können sowohl die Aufgabe von schrägungsverhindernden Bauteilen für die Zahnräder als auch die Aufgabe von Torsionen leitenden Bauteilen zwischen den Trägerscheiben übernehmen. Eine Kraft- und Drehmomenteinleitung erfolgt - insbesondere dank Mittelstegkonzept - gleichförmig bzw. parallel auf beiden Planeten eines Planetenradsatzes (sofern ein Stufenplanet im dem Getriebe verbaut ist). Somit wird die Kraft- und Drehmomenteinleitung auf alle weiteren Bauteile gleichmäßig verteilt. Dadurch kann ein Versatz zwischen den Planetenradsätzen und allen weiteren Bauteilen sowie zwischen Planetenbolzenbohrungen minimiert werden. Eine Belastung wird gleichmäßiger verteilt. Diese Anordnung kann auch als Parallelschaltung der Drehmomentenübertragung bezeichnet werden, weil die Schrägungen bzw. Torsionen erzeugenden Drehmomente jedes Zahnrades parallel geführt werden und insbesondere vorteilhafterweise sich gegenseitig aufhebend geführt werden können.

Vorteilhafterweise sind die Trägerscheiben und das Adapterelement alle gleich dick. Alle Teile können als umgeformte Blechteile hergestellt sein.

Verschiedene Komponenten bzw. Teile des Planetenträgers können auch durch geschickte Blechumformung oder durch Guss zu einem einteiligen Teil hergestellt bzw. zusammengebaut sein. Durch Zusammenfassung mehrerer Teile zu einem einzigen Teil des Planetenträgers, insbesondere in einer Ausführungsform als einteiliger, z. B. gegossener Planetenträger, an dem z. B. Bolzen für Planetenlagerelemente montierbar sind, ist es möglich, mehrere Arbeitsschritte bei einem Getriebeaufbau zusammenzufassen.

In einer vorteilhaften Weiterbildung der Erfindung sind die Abdeckungen als blechumgeformte Gleichteile ausgestaltet, die aufeinander aufgelegt werden können und so gefügt werden können. Ein so gestalteter, aus zwei Abdeckungen aufgebauter Abstandshalter für die Trägerscheiben kann auch als Verbindungskörper bezeichnet werden. Mit anderen Worten, der Verbindungskörper setzt sich aus zwei drehfest verbundenen Verbindungskörperelementen zusammen. Die einzelnen Abdeckungen, die auch als Verbindungskörperelemente bezeichnet werden können, umfassen jeweils ein Grundplattenelement. Hierbei ist es möglich, dass zwei oder mehr als zwei Verbindungsvorsprünge, die auch als Arme oder Beine bezeichnet werden können, in einer axialen Richtung, d. h. in einer Richtung parallel zu der zentralen Achse des zylinderartigen Planetenträgers, von den Grundplattenelementen weg ragen. Besonders vorteilhaft ist es, wenn die Verbindungsvorsprünge jeweils eines Verbindungskörperelements mit jeweils einer Trägerscheibe, insbesondere drehfest, verbunden sind. Die Verbindungsvorsprünge können z. B. verstemmt werden, um eine feste Verbindung zwischen Abdeckung und Trägerscheibe herzustellen. Allgemeiner ausgedrückt, durch eine plastische Verformung der Verbindungsvorsprünge lassen sich die einzelnen, insbesondere als Blechteile ausgeführten Komponenten, verbinden.

Die zuvor durch zwei Abdeckungen realisierte Beabstandung der Trägerscheiben kann auch durch ein Blechteil realisiert sein, aus dem, insbesondere wechselweise, in zwei entgegengesetzte Richtungen, von denen je eine Richtung auf eine Trägerscheibe führt, Arme (die auch als Beine bezeichnet werden können) herausstehen. Die Arme (bzw. Beine) sind zur Verbindung des Blechteils, der einen einzigen Abdeckung mit einer der Trägerscheiben vorgesehen.

Durch die momentenmäßige Entlastung der Trägerscheiben bzw. der Stege ist es möglich, den Planetenträger insgesamt filigraner auszuführen. Natürlich können die einzelnen Bauteile wie scheibenartige Trägerplatten auch als gegossenes Bauteil, z. B. als Leichtmetallgussbauteile, hergestellt sein. Eine Maßnahme der Gewichtseinsparung ergibt sich aus der Verwendung von umgeformten Blechteilen für die einzelnen Bauteile des Planetenträgers und/oder des Planetengetriebes.

Der vorteilhafte Planetenträger bzw. die vorteilhaft gestalteten Planetengetriebe können auch wie folgt beschrieben werden:
Die Trägerscheiben, die auch als Stege eines Planetengetriebes ausgeführt sein können, sind die tragenden Bauteile für achsenbildende Bauteile wie Bolzen, Stifte, insbesondere wellenartige Stift(e), oder Führungshülsen (z. B. inklusive Gleitlager, Tonnenlager oder Kugellager), auf denen einzelne Planetenzahnräder, z. B. in einer besonderen Ausführungsform auch Doppelplaneten oder Stufenplaneten, lagern. Aufgrund der unterschiedlichen Durchmesser der einzelnen Planeten und aufgrund der Momente, die über das Planentengetriebe übertragen werden, ergeben sich Torsionen an den Übergängen zwischen den die Tragfunktion(en) realisierenden Bauteilen wie Bolzen, Stifte oder Führungshülsen und den Trägerscheiben bzw. den Stegen. Hierbei kann eine in eine erste Trägerscheibe eingeleitete Torsion bzw. das eingeleitete Moment größer oder kleiner sein als eine in eine zweite Trägerscheibe eingeleitete Torsion bzw. das zweite, eingeleitete Moment. Diese Torsionen und Momente sind aus der tragenden Struktur des Planentengetriebes, also seinem Planententräger, auszuleiten.

Die Drehmomente, Torsionen und Momente, die über die erste Trägerscheibe geleitet werden, und die Drehmomente, Torsionen und Momente, die über die zweite Trägerscheibe geleitet werden, können über ein die Trägerscheiben verbindendes Bauteil, wie z. B. über eine einteilige oder mehrteilige Abdeckung, über Mantelflächen oder über hohlzylinderartige Abstandshalter, zusammengeführt werden, sodass sie sich zumindest zum Teil gegenseitig kompensieren. Das Bauteil, in das die Momente aus den Trägerscheiben, vorzugsweise in entgegengesetzte Richtungen, eingeleitet werden, kann ein in einem äußeren Bereich oder in einem mittleren bzw. inneren Bereich des Planetenträgers bzw. des Planetengetriebes angeordnetes, verbindendes Bauteil oder eine verbindende Baugruppe sein. Die zusammengeführten Momente, die sich nicht gegenseitig kompensieren, können über eine Mittenankopplung auf ein weiterführendes Bauteil weitergeleitet werden. Hierbei wird mit Mittenankopplung eine kräfte- und momentenführende, z. B. stegartige, Struktur gemeint, die nicht unbedingt vollständig mittig zwischen beiden Trägerscheiben angeordnet sein muss, sondern auch zu einer Trägerscheibe hin näher angeordnet sein kann. Die Mittenankopplung kann in einer bevorzugten Ausgestaltung im Inneren des Planetenträgers platziert sein. Die Mittenankopplung kann zu einer Trägerscheibe hin näher als zur anderen Trägerscheibe hin angeordnet ein Moment ausleiten. Die Mittenankopplung kann auch als kraft- und/oder Moment ausleitendes Bauteil bezeichnet werden.

Die Mittenankopplung kann so zwischen den Trägerscheiben platziert sein, dass die Momentenwege von der einen Trägerscheibe und von der anderen Trägerscheibe unterschiedliche Längen aufweisen. Hierbei kann der Momentenweg, der durch eine Trägerscheibe geht, durch die Dicke, Stärke, Steifigkeit (z. B. aufgrund der Materialwahl) oder Masse der Trägerscheibe gestaltet sein.

Soll die Ausleitung über einen mittleren Bereich bzw. einen inneren Bereich des Planetenträgers geschehen, so kann die Weiterleitung der Kräfte und/oder Momente über eine Lagersitzhülse auf ein Adapterelement geführt sein.

Eine weitere Ursache, warum die Position der Mittenankopplung von einer Seite bzw. von einer Trägerscheibe (oder auch von einer mittleren Position zwischen den Trägerscheiben) auf die andere Seite bzw. in Richtung auf die andere Trägerscheibe hin zu verlagern ist, liegt in der Veränderung der Steifigkeit der Trägerscheibe bzw. der Stege. In Abhängigkeit der zu erwartenden Momente bzw. der zu erwartenden Torsionen kann einer der Stege bzw. eine der Planetenträgerplatten stärker, dicker bzw. massiver ausgeführt sein als die andere Planetenträgerplatte. Wird, z. B. aufgrund von Radien der Zahnräder des Planetengetriebes, in einer Planetenträgerplatte ein höheres Moment eingeleitet als in der anderen Planetenträgerplatte, so ist es vorteilhaft, wenn die Mittenankopplung näher in Richtung auf die Planetenträgerplatte angesiedelt ist, die das größere Moment durchleitet.

Jede der beiden Platten bzw. Trägerscheiben, die seitlich, insbesondere indirekt, als Lager für die Planeten dienen, können in ihrer Steifigkeit voneinander abweichen, z. B. aufgrund unterschiedlicher Dicke der Mäntel der Platten bzw. Trägerscheiben. Über die Platten bzw. Trägerscheiben werden Momentenflüsse weitergeleitet, die durch ein die Trägerscheiben verbindendes Bauteil zusammengeführt werden. Eine Stelle der Zusammenführung der Momentenflüsse kann somit genau in einer Mitte zwischen den Trägerscheiben positioniert sein. Weil bei einzelnen Getrieben, insbesondere mit Stufenplanetenrädern, die Momentenverteilung innerhalb des Getriebes und somit des Planetenträgers ungleichmäßig ist, kann die Momentenein- bzw. -weiterleitung in den Platten bzw. den Planetenträgerplatten durch Position der Mittenentkopplung (bzw. Mittenankopplung bzw. Mittenausleitung) beeinflusst werden. Bildlich gesprochen kann eine Mittenentkopplung in Richtung auf eine der Seiten des Planetenträgers verschoben werden. Besonders bevorzugt wird auf die Seite die Mittenentkopplung verschoben, bei der eine stärkere Momentenauskopplung notwendig erscheint oder notwendig ist. Weil die Momente entgegengesetzt in das Entkopplungs- bzw. Auskopplungsbauteil von den Trägerscheiben her kommend eingeleitet werden, heben sich die Momente wenigstens zum Teil wieder auf. Eines der Ergebnisse der beschriebenen Konstruktion ist eine geringere Verdrehung an den Lagerstellen zu den Planeten bzw. der Planetenlagerelemente hin.

Nach einem weiteren Aspekt kann eine Abdeckung, eine Ableitplatte oder eine die Trägerscheiben verbindende Baugruppe zusätzlich als die Trägerscheibe versteifend ausgestaltet sein. Eine solche Versteifung reduziert weiterhin die Torsionswirkungen.

Die Mittenankopplung kann auf ein weiterführendes Bauteil, wobei das weiterführende Bauteil ein rotierendes Bauteil oder auch ein ortsfestes Bauteil sein kann, ausgekoppelt werden.

Für die Lagerung der Planeten gibt es verschiedene Möglichkeiten. Die Planeten können auf wellenartigen Stiften gelagert sein. Die Planeten können auf Bolzen gelagert sein. Die Planeten können auf Stummeln gelagert sein. Auch sind (umgekehrte) Kugellagerlösungen möglich. Welche Art eines Planetenlagerelements letztendlich zur Anwendung kommt, hängt unter anderem von der Anforderung an die Leichtläufigkeit der Planeten und gegebenenfalls von der Notwendigkeit der Reduktion von Drehreibungen ab.

Ein weiterer zu berücksichtigender Aspekt ist die Gleichzahligkeit der Lagerstellen bzw. Übergangsstellen in der einen Planetenträgerplatte und in der anderen Planetenträgerplatte. In dem Fall, in dem es drei Planetenlagerelemente gibt, sind diese drei Planetenlagerelemente sowohl in der linken Planetenträgerplatte als auch in der rechten Planetenträgerplatte eingeführt bzw. an diese angebunden. Die Planetenlagerelemente für Planeten eines Typs, z. B. einer Stufe oder eines Zahnkranzes, erstrecken sich von einer ersten, äußeren, z. B. linken, Planetenträgerplatte bis zu einer zweiten, ebenfalls äußeren, z. B. rechten, Planetenträgerplatte.

In dem Fall, in dem als Planetenlagerelemente wellenartige Stifte in den Trägerscheiben eingesetzt sind, reichen diese vorteilhafterweise von einer (äußeren) Trägerscheibe zu der anderen (äußeren) Trägerscheibe. Die zwischen den Trägerscheiben vorhandene Struktur, z. B. die Abdeckungen oder die Ableitplatte, ist idealerweise so gestaltet, dass sie keine Berührung mit den wellenartigen Stiften und auch keine Berührung mit den Planeten hat.

Die zuvor beschriebene technische Lösung entfaltet besonders ihre Wirkung, wenn ein Planetengetriebe zum Einsatz kommen soll bzw. kommt, bei dem das Sonnenrad entweder das Antriebszahnrad oder das Abtriebszahnrad ist, über das Planetenzahnräderdrehmomente weitergeleitet werden. Ein Planeten einfassendes Hohlrad (im Sinne eines äußeren Hohlrads) stellt dementsprechend das Abtriebszahnrad (wenn das Sonnenrad das Antriebszahnrad ist) oder das Antriebszahnrad (wenn das Sonnenrad das Abtriebszahnrad ist) dar. Der Planetenträger bildet in dem Fall die Tragstruktur für die Planeten, gegebenenfalls auch die Tragstruktur für das Sonnenrad und gegebenenfalls auch die Tragstruktur für das (außenliegende) Hohlrad. Ein solcher Planetenträger kann ortsfest in einem Getriebe positioniert sein. Der Planetenträger kann aber auch auf andere Getriebekomponenten weiterführend angebunden sein, die womöglich ebenfalls rotieren. Beispielhaft sei ein Differentialgehäuse genannt. Bei einer solchen Ausgestaltung geht der Planetenträger in ein Differentialgehäuse über.

Die vorgestellte technische Lösung trägt dazu bei, dass ein Verkippen der Planetenachse möglichst vermieden, zumindest verringert wird.

Die vorgestellte technische Lösung lässt sich im Bereich des Getriebeinneren, genauer zwischen den Trägerscheiben schraubenfrei realisieren. Mit anderen Worten, innergetriebliche Schrauben sind in vorteilhaften Ausführungsformen nicht vorhanden.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
- Figur 1: eine schematische Darstellung eines erfindungsgemäßen Planetengetriebes ist,
- Figur 2: eine erste Trägerscheibe in einer 3D-Ansicht zeigt,
- Figur 3: eine erste Abdeckung in einer 3D-Ansicht zeigt,
- Figur 4: eine zweite Trägerscheibe in einer Draufsicht zeigt,
- Figur 5: eine zweite Abdeckung in einer 3D-Ansicht zeigt,
- Figur 6: einen Lagersitz in einer Schnittansicht zeigt,
- Figur 7: eine Adapterscheibe in einer 3D-Ansicht zeigt,
- Figur 8: eine Schnittansicht durch einen zusammengefügten Planetenträger zeigt, der aus den zuvor dargestellten Komponenten zu einem einstückigen Bauteil zusammengesetzt werden kann, und
- Figur 9: ein Getriebe in Schnittansicht zeigt, in dem als ein Teilgetriebe ein Planetengetriebe nach den zuvor erläuterten Ausführungsbeispielen integriert ist.

### Figurenbeschreibung

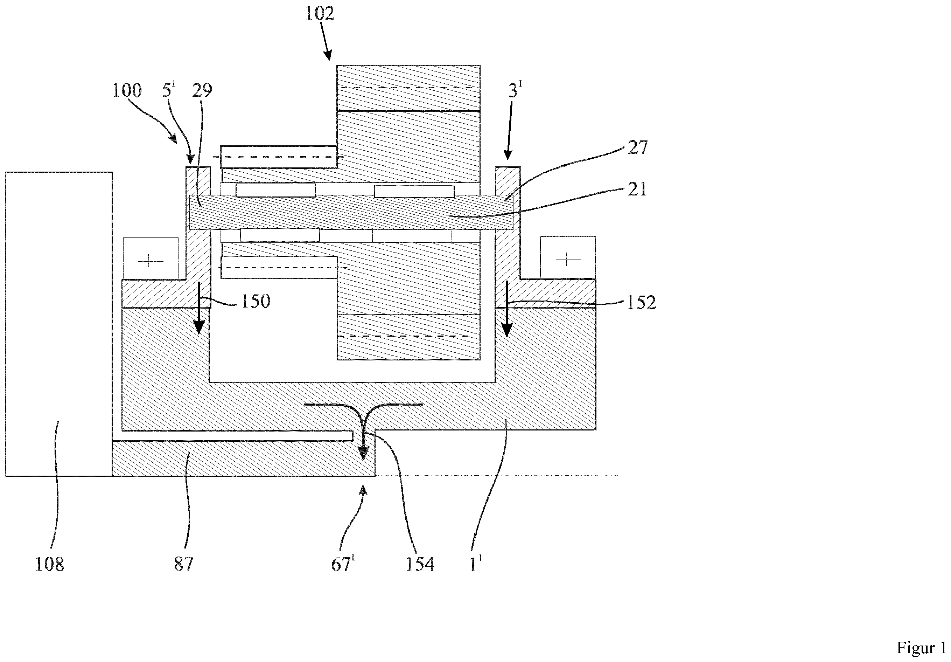

Figur 1 zeigt eine schematische Darstellung eines Planetenträgers 1^{I}, der in prinzipieller Darstellung als Teil eines Planetengetriebes 100 dargestellt ist. Die einzelnen Planetenzahnräder, wie das Planetenzahnrad 102, sind über Planetenlagerelemente, wie das Planetenlagerelement 21, an den beiden Trägerscheiben 3^{I}, 5^{I} befestigt. Genauer gesagt, die Enden 27, 29 des Planetenlagerelements 21 sind in den Trägerscheiben 3^{I}, 5^{I} eingebracht. Findet ein Schrägversatz, z. B. durch eine Schrägstellung von Zahnrädern, statt, so werden die Torsionen 150, 152, die in den Trägerscheiben 3^{I}, 5^{I} auftreten können, kompensiert. Die Resultierende 154 der Torsion 150, 152 ist deutlich reduziert. Die Resultierende 154 muss nur noch über die Mittenausleitung 67' auf ein weiterführendes Bauteil, wie das Differenzial 108, ausgeleitet werden. Für diese Ausleitung der Momente, die durch eine Schrägung entstehen, ist die Verbindungsnase 87 als weiterführende Verbindung vorgesehen.

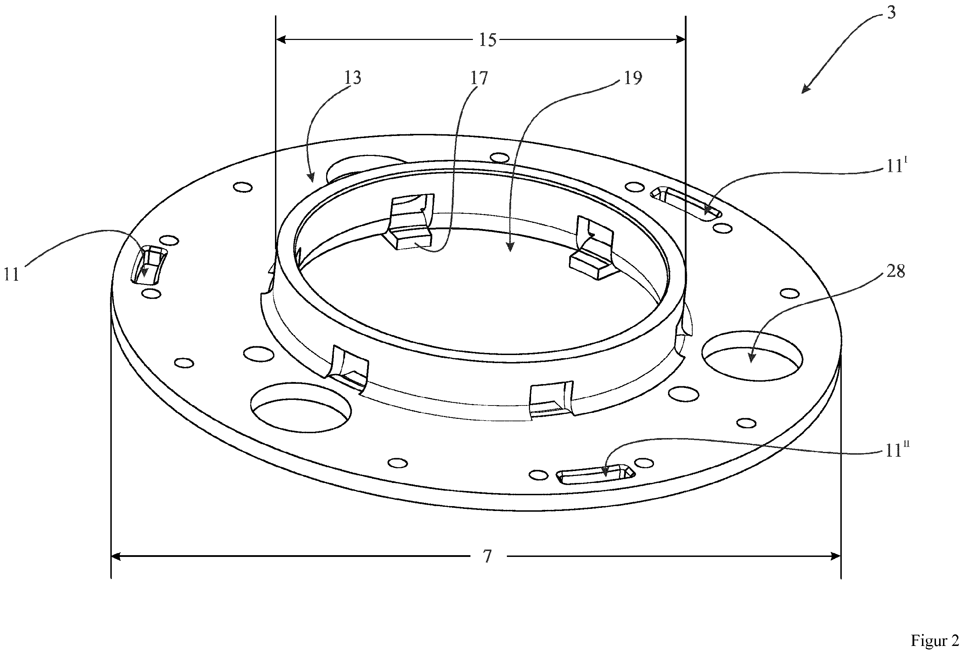

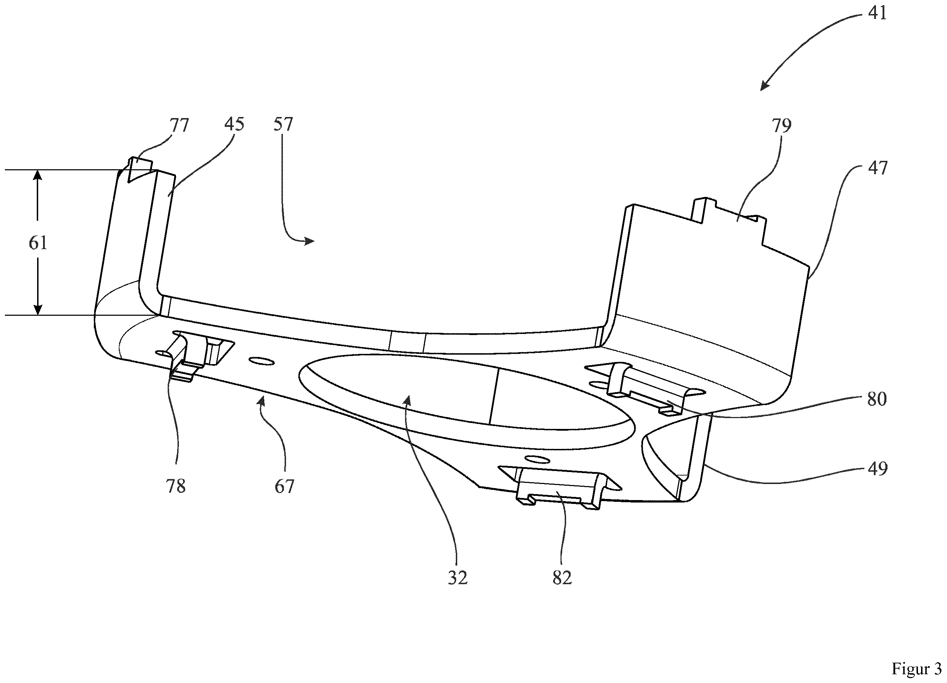

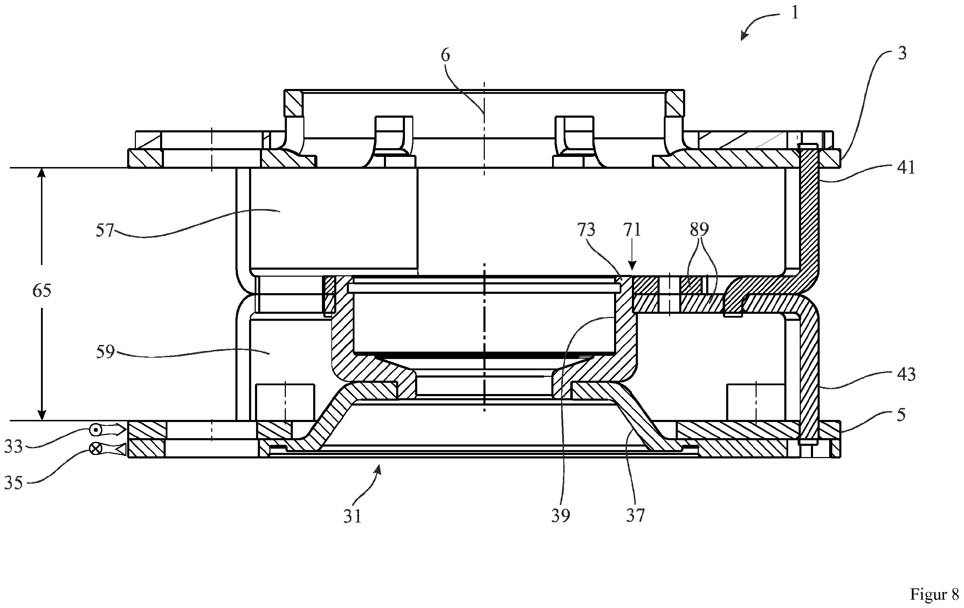

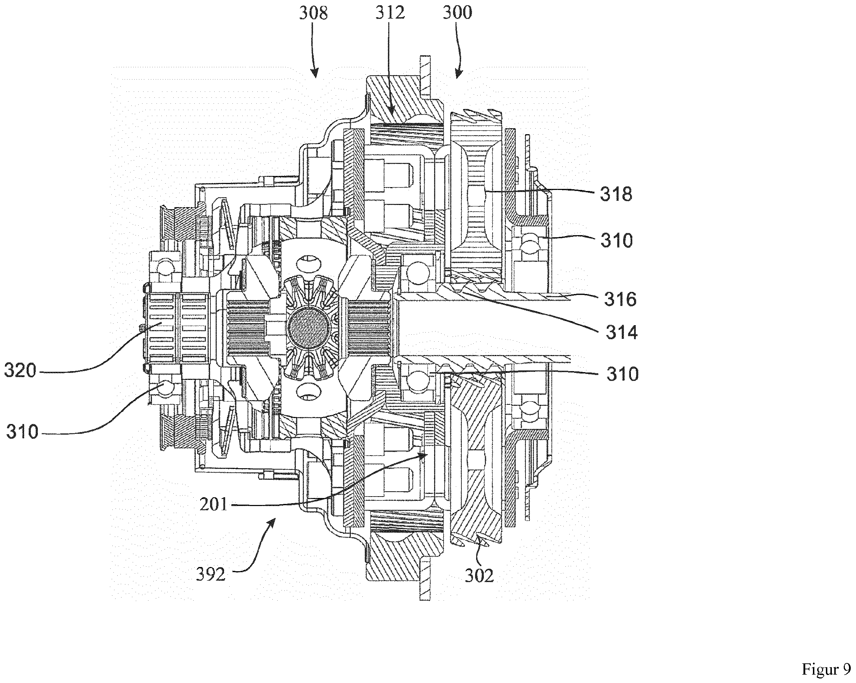

Die in Figur 2 gezeigte erste Trägerscheibe 3 für einen Planetenträger (siehe Planetenträger 1 in Figur 8) weist eine erste äußere Abmessung 7 auf, die auch als Kreisdurchmesser bezeichnet werden kann. Um eine erste Zentralöffnung 19 der ersten Trägerscheibe 3 herum ist ein Stützkragen 13 angeordnet, der eine Kragenweite 15 aufweist. Von dem Stützkragen 13 aus ragen eine Mehrzahl von Anschlagsnasen, wie die Anschlagsnase 17, radial gleichmäßig beabstandet in die erste Zentralöffnung 19 hinein. Die erste Trägerscheibe 3 weist weitere Öffnungen auf, wie die Verbindungsöffnungen 11, 11^{I}, 11^{II}, die zur Befestigung einer ersten Abdeckung 41 (siehe Figur 3) durch ein Fügen von Nasen vorgesehen sind, wobei die Nasen in die Verbindungsöffnungen 11, 11^{I}, 11^{II} einsetzbar sind. Außerdem weist die erste Trägerscheibe 3 erste Bolzeneinführöffnungen, wie die erste Bolzeneinführöffnung 28 auf, die der Befestigung von Bolzen (in Figur 2 nicht dargestellt) für ein Planetenzahnrad, wie ein Stufenplanetenrad (siehe Figur 9), dienen.

Figur 3 zeigt die erste Abdeckung 41 aus einer Sicht von unten in einer schrägen 3D-Ansicht. Die erste Abdeckung 41 ist eine flache, aus Blech gefertigte Abdeckung mit nahezu in einem 90°-Winkel hierzu herausstehenden Beinen 45, 47, 49. Die Beine 45, 47, 49 sind zueinander um 120° versetzt angeordnet. Die Beine 45, 47, 49 fassen einen ersten Mittendurchgriff 32 als parallele Umrahmung ein. Die erste Abdeckung 41 ist in Blech gefertigt so stark dimensioniert, dass sie als erste Mittenausleitung 67 fungieren kann. Die erste Mittenausleitung 67 hat eine erste Anschlussnase 78, eine zweite Anschlussnase 80 und eine dritte Anschlussnase 82.

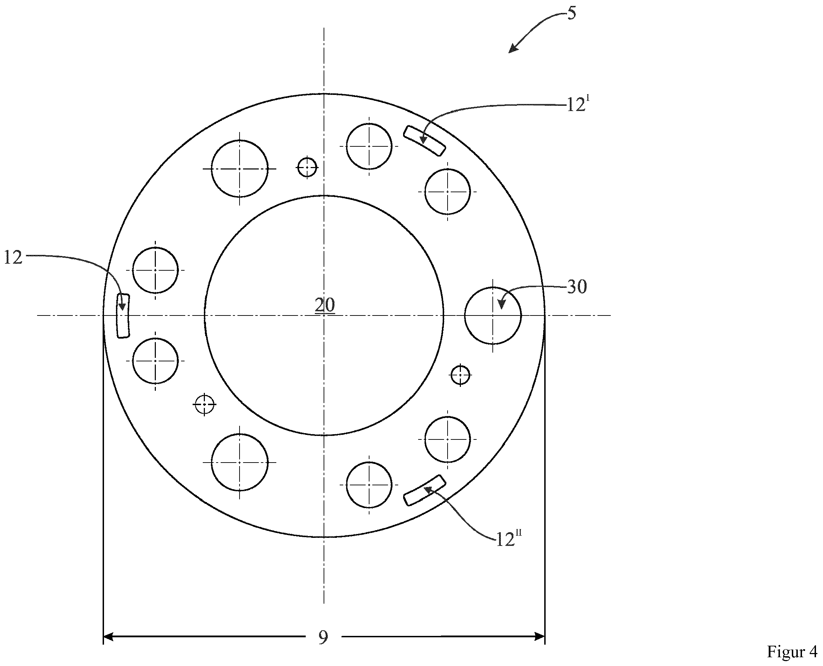

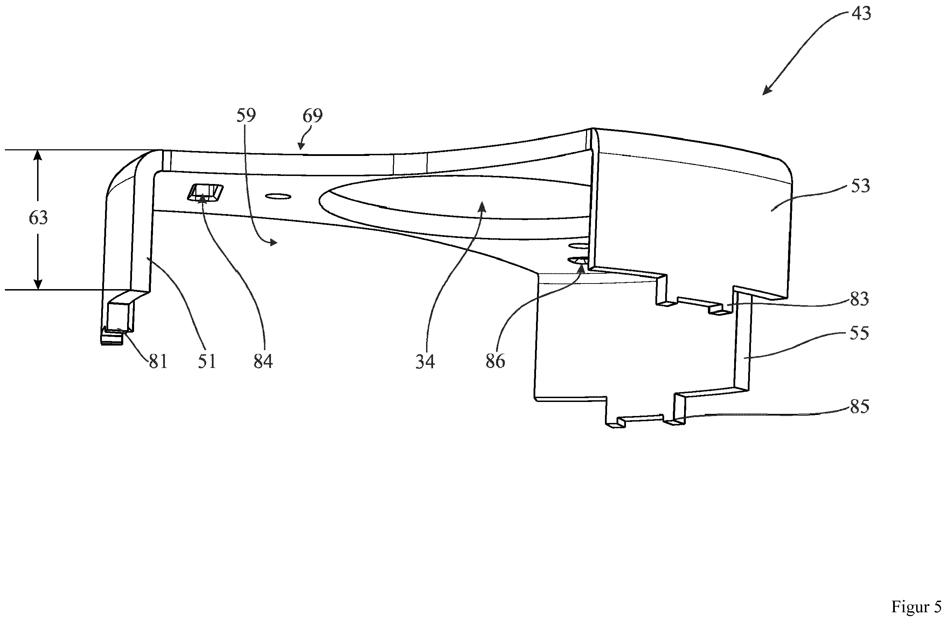

Diese umgebördelte Anschlussnasen 78, 80, 82 sind für die Befestigung der zweiten Mittenausleitung 69 der zweiten Abdeckung 43 (siehe Figur 5) vorgesehen. Am Ende der Beine 45, 47, 49 sind mehrere erste Verbindungsnasen, wie die erste Verbindungsnase 77 und die zweite Verbindungsnase 79, vorhanden, über die die Abdeckung 41 mit der Trägerscheibe 3 bzw. 5 (siehe Figur 2 bzw. Figur 4) verbunden werden kann. Zwischen den Beinen 45, 47, 49 spannt sich der Zwischenraum 57 auf. Die Höhe des Zwischenraums 57 bestimmt sich aus der Höhe der als Abstandshalter 61 fungierenden Mittenausleitung 67. Die Höhe des Zwischenraums 57 ist auf eine Breite eines Planeten bzw. einer Zahnradhälfte eines Planeten abgestimmt.

Eine zweite Trägerscheibe 5 ist in Figur 4 in Draufsicht dargestellt. Die zweite Trägerscheibe 5 weist eine zweite äußere Abmessung 9 auf, die gleich groß wie die erste äußere Abmessung 7 der ersten Trägerscheibe 3 ist (siehe Figur 2). Im Zentrum der zweiten Trägerscheibe 5 befindet sich eine zweite Zentralöffnung 20. Die zweite Trägerscheibe 5 hat drei zweite Bolzeneinführöffnungen, wie die zweite Bolzeneinführöffnung 30, zur Aufnahme von Lagerbolzen für Planetenräder (in Figur 4 nicht dargestellt). Zwischen den zweiten Bolzeneinführöffnungen, wie der zweiten Bolzeneinführöffnung 30, ist jeweils gleichmäßig beabstandet eine Verbindungsöffnung 12, 12^{I}, 12^{II} vorhanden, die für eine Befestigung einer zweiten Abdeckung 43 (siehe Figur 5) vorgesehen sind.

Figur 5 zeigt die zweite Abdeckung 43, die spiegelbildlich zu der Abdeckung 41 (zu sehen in Figur 3) in der Einbaulage anzuordnen ist. Aus diesem Grund hat die Abdeckung 43 Anschlussöffnungen, wie die erste Anschlussöffnung 84 und die zweite Anschlussöffnung 86, in die die erste Anschlussnase 78 oder die zweite Anschlussnase 80 der Abdeckung 41 (nach Figur 3) eingreifen kann. Die zweite Abdeckung 43 schafft mit Hilfe ihrer Beine 51, 53, 55 einen Zwischenraum 59. Der Zwischenraum 59 wird durch die Beine 51, 53, 55 begrenzt. Die Länge der Beine 51, 53, 55 bestimmt die Höhe des Abstandshalters 63. Mittig der Abdeckung 43 ist ein Mittendurchgriff 34, der eine Ausnehmung in der Mittenausleitung 69 ist. Mithilfe der Verbindungsnasen 81, 83, 85 kann die Abdeckung 43 an das nächste Teil, z. B. an die Trägerscheibe 5 (siehe Figur 4), gefügt werden.

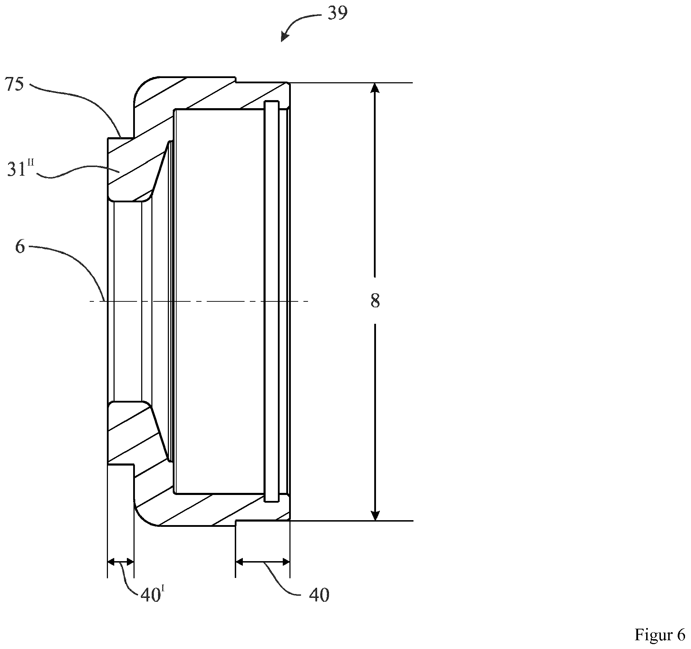

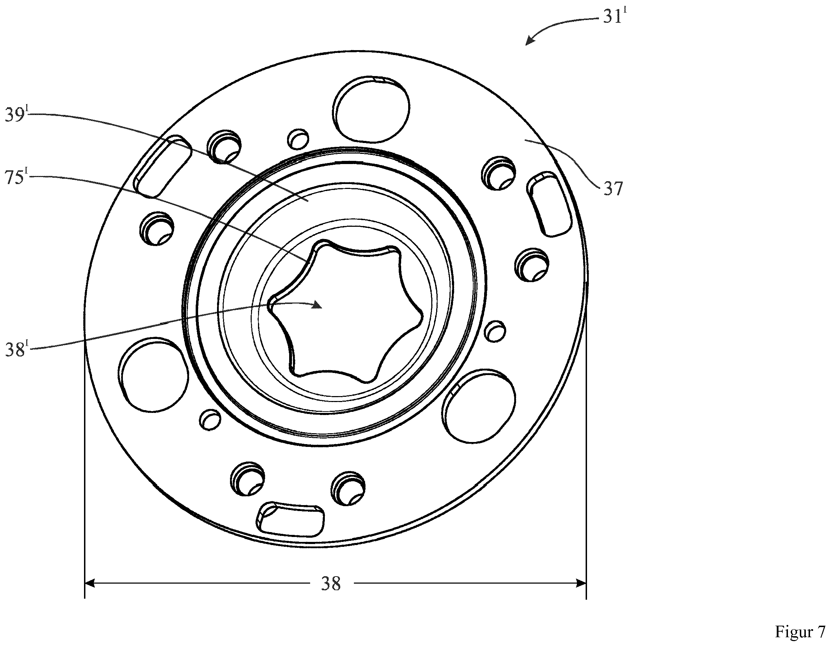

Ein wannenförmiges Teil 39 (zu sehen in Figur 6) und ein ringförmiges Teil 37 (zu sehen in Figur 7) sind Komponenten eines (sich aus wenigstens zwei Teilen (siehe Bezugszeichen 31^{I}, 31^{II}) zusammensetzenden) Adapterelements 31 (vgl. Figur 8), weshalb die Figuren 6 und 7 gemeinsam erläutert werden. Das wannenförmige Teil 39 weist entlang der Sonnenachse 6 umfänglich einen Mitteneinsatzbereich 40 auf. Axial beabstandet von dem Mitteneinsatzbereich 40 ist ein Adapterringeinsatzbereich 40^{I} angeordnet, der einen Passungskranz 75 aufweist. Der Passungskranz 75 gehört in den Passungskranz 75^{I}, der die Wanneneinsatzöffnung 38^{I} des ringförmigen Teils 37 (siehe Figur 7), genauer ein in das ringförmige Teil 37 eingelassenes, weiteres wannenförmiges Teil 39^{I}, umschließt. Der ringförmige Teil 37 bzw. das Adapterelement 31 hat einen Außendurchmesser 38, der gleich groß ist wie die zweite äußere Abmessung 9 der zweiten Trägerscheibe 5 (gem. Figur 4) und insbesondere gleich groß wie die erste äußere Abmessung 7 der ersten Trägerscheibe 3 (gem. Figur 2) ist. Die Durchmesser, wie der Durchmesser 8 des wannenförmigen Teils 39 (siehe Figur 6), sind aufeinander abgestimmt, sodass ein nachträglicher Einbau des Adapterelements 31 (vgl. Figur 8) möglich ist.

In Figur 8 sind die in den Figuren 2 bis 7 gezeigten Komponenten als ein zusammengebauter Planetenträger 1 in einem Schnitt dargestellt (im Sinne einer Zusammenbauzeichnung), wobei der Querschnitt durch die Sonnenachse 6 gelegt ist. Die erste Trägerscheibe 3 und die zweite Trägerscheibe 5 weisen einen durch einen Gesamtabstandshalter 65 gebildeten Abstand auf, der sich aus der ersten Abdeckung 41 und der zweiten Abdeckung 43 zusammengesetzt ergibt. Die erste Abdeckung 41 schließt gegenüber der ersten Trägerscheibe 3 den ersten Zwischenraum 57 ein. Die zweite Abdeckung 43 schließt gegenüber der zweiten Trägerscheibe 5 den zweiten Zwischenraum 59 ein. In den zweiten Zwischenraum 59 hinein ragt das Adapterelement 31 mit dem ringförmigen Teil 37 sowie das an das ringförmige Teil 37 angesetzte wannenförmige Teil 39. Das wannenförmige Teil 39 bildet eine ringförmige Verbindung zwischen dem ringförmigen Teil 37 und der zweiten Abdeckung 43. Das Adapterelement 31 ist um die Sonnenachse 6 drehbar. Auch die zweite Trägerscheibe 5 ist um die Sonnenachse 6 drehbar. Beide Teile, Adapterelement 31 und Trägerscheibe 5 können jeweils entkoppelt voneinander einer ersten Drehbewegungsrichtung 33 und einer zweiten Drehbewegungsrichtung 35 folgen. Die Drehbewegungsrichtungen 33, 35 sind in der Schnittzeichnung von Figur 8 jeweils durch ein Symbol für eine Bewegung aus der Zeichenebene heraus kenntlich gemacht.

Wie außerdem in Figur 8 zu sehen ist, ist Teil des Adapterelements 31 der Lagersitz 71, der durch die Lagersitzhülse 73 geschaffen ist. An dem Lagersitz 71 sitzt in drehbeweglicher Verbindung die durch die Abdeckung 41, 43 geschaffene Stützstruktur 89 für die Trägerscheiben 3, 5. Die Stützstruktur 89 ist eine doppelwandige, aus den beiden Abdeckungen 41, 43 gebildete Verstärkungsstruktur, durch die die Trägerscheiben 3, 5 stabilisiert werden. Folglich können die Trägerscheiben 3, 5 dünner bzw. filigraner ausgeführt sein.

Figur 9 zeigt ein Getriebe 392, das sich aus mehreren (Teil-)Getrieben 300, 308 zusammensetzt. Das eine Getriebe 300 ist eine Variante des Getriebes 100, dessen Planetenträger 1 in den Figuren 2 bis 8 ausführlicher vorgestellt ist. Abtriebsseitig folgt dem Getriebe 300 ein Differential 308.

Es kann auch gesagt werden, Figur 9 zeigt eine als Ganzes mit 201 bezeichnete Planetenaufnahmevorrichtung zur Aufnahme von Planetenzahnrädern 302 für ein in Figur 9 in einer Schnittdarstellung schematisch dargestelltes (Gesamt-)Getriebe 392, dessen einer Teil ein Planetengetriebe 300 ist. Der Planetenträger 201 kann auch als Planetenaufnahmevorrichtung bezeichnet werden.

Das (Gesamt-)Getriebe 392 hat mehrere Lagervorrichtungen 310, welche als Wälzlagervorrichtungen, genauer als Rillenkugellager ausgebildet sind.

Die Lagervorrichtungen 310, die in der Figur 9 durch Wälzlager dargestellt sind, können auch durch Schrägkugellager, Zylinderrollenlager und/oder Kegelrollenlager ausgebildet sein.

Das Getriebe 392 umfasst ein Hohlrad 312, das Teil des Planetengetriebes 300 ist.

Das Getriebe 392 hat als Teil seines Planetengetriebes 300 ein Sonnenrad 314. Das Sonnenrad 314 sitzt auf der Eingangswelle 316. Über die Eingangswelle 316 kann eine Drehbewegung in das Getriebe 392 eingeleitet werden.

Darüber hinaus hat das Getriebe 392, genauer der Teil des Getriebes 392, der das Planetengetriebe 300 ist, Bolzen 318.

Die Planetenräder bzw. Planetenzahnräder 302 sind drehbar an den Bolzen 318 gelagert. Soll die Reibung der so gestalteten Lagerung gering sein bzw. reduziert werden, so ist es vorteilhaft, wenn an jener Stelle auch Lagervorrichtungen wie Nadellager, Kugellager bzw. Wälzlagervorrichtungen eingebaut sind.

Die Bolzen 318 sind mit dem Planetenträger 201 drehfest verbunden, es kann auch gesagt werden, an dem Planetenträger 201 festgelegt.

Das Getriebe 392 hat in der dargestellten Ausgestaltung drei Bolzen 318, wobei an jeweils einem Bolzen 318 zwei einzelne Planetenräder bzw. ein Stufenplanetenzahnrad 301 angeordnet ist. Wie zu sehen ist, trägt jeder Bolzen 318 ein großes und ein (hierzu im Vergleich) kleineres Planetenrad.

Über eine ausgangsseitig angeordnete Abtriebswelle 320 gibt das Getriebe 392 seine über die Eingangswelle 316 eingeleitete Antriebsleistung an weiterführende Bauteile eines (sonst nicht näher dargestellten) Antriebsstrangs weiter.

Die in den einzelnen Figuren gezeigten Ausgestaltungsmöglichkeiten lassen sich auch untereinander in beliebiger Form verbinden.

So ist es auch möglich, mit dem gleichen Konstruktionsprinzip bzw. nach der gleichen Konstruktionstechnik ein Doppel- oder sogar ein Mehrfachplanetengetriebe zu realisieren.

Auch ist es möglich, einzelne Zahnräder mit Evolventenverzahnungen auszustatten.

Einige Aspekte des zuvor Gesagten noch einmal zusammengefasst, beschäftigt sich die vorliegende Erfindung mit einem Planetengetriebe und seinem Planetenträger, bei dem aufgrund einer Mittenankopplung ein erstes Moment und ein zweites Moment, die aus Torsionen der Planetenlagerelemente an dem Planetenträger stammen, eine zumindest teilweise Kompensation der sich dank günstiger Zusammenleitung der Momente gegenseitig aufhebenden Momentenanteile vor deren Ausleitung erfahren. Hierdurch ist es möglich, einen filigraneren, z. B. in Blech gefertigten, Planetenträger für Planetengetriebe mit größeren Drehmomenten zu nutzen.

### Bezugszeichenliste

- 1, 1^{I}: Planetenträger
- 3, 3^{I}: erste Trägerscheibe
- 5, 5^{I}: zweite Trägerscheibe
- 6: Sonnenachse
- 7: erste äußere Abmessung
- 8: Durchmesser
- 9: zweite äußere Abmessung
- 11, 11^{I}, 11^{II}: Verbindungsöffnung
- 12, 12^{I}, 12^{II}: Verbindungsöffnung
- 13: Stützkragen
- 15: Kragenweite
- 17: Anschlagsnase
- 19: erste Zentralöffnung
- 20: zweite Zentralöffnung
- 21: erstes Planetenlagerelement, insbesondere erster Bolzen
- 27: erstes Ende des Planetenlagerelements, insbesondere des Bolzens
- 28: erste Bolzeneinführöffnung
- 29: zweites Ende des Planetenlagerelements, insbesondere des Bolzens
- 30: zweite Bolzeneinführöffnung
- 31, 31^{I}, 31^{II}: Adapterelement
- 32: erster Mittendurchgriff
- 33: erste Drehbewegung
- 34: zweiter Mittendurchgriff
- 35: zweite Drehbewegung
- 37: ringförmiges Teil, insbesondere des Adapterelements
- 38: Außendurchmesser des Adapterelements, insbesondere des ringförmigen Teils
- 38^{I}: Wanneneinsatzöffnung
- 39, 39^{I}: wannenförmiges Teil, insbesondere des Adapterelements
- 40: Mitteneinsatzbereich
- 40^{I}: Adapterringeinsatzbereich
- 41: erste Abdeckung
- 43: zweite Abdeckung
- 45: erstes Bein der ersten Abdeckung
- 47: zweites Bein der ersten Abdeckung
- 49: drittes Bein der ersten Abdeckung
- 51: erstes Bein der zweiten Abdeckung
- 53: zweites Bein der zweiten Abdeckung
- 55: drittes Bein der zweiten Abdeckung
- 57: erster Zwischenraum, insbesondere des Planetengetriebes
- 59: zweiter Zwischenraum, insbesondere des Planetengetriebes
- 61: erster Abstandshalter
- 63: zweiter Abstandshalter
- 65: Gesamtabstandshalter
- 67, 67^{I}: erste Mittenausleitung, insbesondere Mittenankopplung oder Mittenentkopplung
- 69: zweite Mittenausleitung, insbesondere Mittenankopplung oder Mittenentkopplung
- 71: Lagersitz
- 73: Lagersitzhülse
- 75, 75^{I}: Passungskranz, insbesondere des Lagersitzes
- 77: erste Verbindungsnase
- 78: erste Anschlussnase
- 79: zweite Verbindungsnase
- 80: zweite Anschlussnase
- 81: dritte Verbindungsnase
- 82: dritte Anschlussnase
- 83: vierte Verbindungsnase
- 84: erste Anschlussöffnung
- 85: fünfte Verbindungsnase
- 86: zweite Anschlussöffnung
- 87: sechste Verbindungsnase
- 89: Stützstruktur
- 100: Planetengetriebe
- 102: erstes Planetenzahnrad, insbesondere Stufenplanetenzahnrad
- 108: Differential
- 150: erste Torsion
- 152: zweite Torsion
- 154: Resultierende der Torsionen
- 201: Planetenträger
- 300: Planetengetriebe
- 302: erstes Planetenzahnrad, insbesondere Stufenplanetenzahnrad
- 308: Differential, insbesondere Differentialgehäuse
- 310: Lagervorrichtung, insbesondere Wälzlagervorrichtung
- 312: Hohlrad
- 314: Sonnenrad
- 316: Welle, insbesondere Eingangswelle
- 318: Bolzen, insbesondere als Lager
- 320: Abtriebswelle
- 392: Gesamtgetriebe

## Patentansprüche

1. Planetenträger (1, 1^{I})
für ein mehrstufiges Planetengetriebe (100),
der eine erste Trägerscheibe (3, 3^{I}) und eine zweite Trägerscheibe (5, 5^{I}), insbesondere in ihren äußeren Abmessungen (7, 9) identische Trägerscheiben (3, 3^{I}, 5, 5^{I}), umfasst,
die jede für sich einen Teil eines Planetenlagerelements (21, 23), wie einen Bolzen oder einen wellenartigen Stift, z. B. jeweils ein Ende des Bolzens (29) oder des Stifts, trägt,
**dadurch gekennzeichnet, dass**
das Planetengetriebe ein mit Stufenplanetenrädern (102) ausgestattetes Stufenplanetengetriebe (100) ist,
wobei vorzugsweise mehrere Planetenlagerelemente (21, 23) vorhanden sind,
von denen idealerweise wenigstens einige je für sich eines der Stufenplanetenräder (102) tragen,
wobei auf wenigstens einer der beiden Trägerscheiben (3, 3^{I}, 5, 5^{I}) ein, insbesondere drehbeweglich, entkoppeltes Adapterelement (31, 31^{I}, 31^{II}) vorhanden ist,
über das insbesondere abtriebsseitig ein Torsionsmoment ausgeleitet werden kann, und wobei ein Lagersitz (71) schlüssig, wie form- und/oder kraftschlüssig, eine Verbindung zwischen dem Adapterelement (31, 31^{I}, 31^{II}) und einem mittleren Bereich in einem Getrieberaum des Planetengetriebes (100) bildet,
wodurch eine Momentenausleitung wie eine Torsionsmomentenausleitung über den mittleren Bereich erfolgt.

2. Planetenträger (1, 1^{I}) nach Anspruch 1,
**dadurch gekennzeichnet, dass**
die Stufenplanetenräder (102) des Planetengetriebes (100) antriebsseitig einen größeren Planeten und abtriebsseitig einen kleineren Planeten auf einer gemeinsamen Achse und fest gefügt aufweisen.

3. Planetenträger (1, 1^{I}) nach einem der vorhergehenden Ansprüche,
**dadurch gekennzeichnet, dass**
mehrere Planetenlagerelemente (21, 23) vorhanden sind,
von denen jedes für sich ein Stufenplanetenrad (102) hält.

4. Planetenträger (1, 1^{I}) nach einem der vorhergehenden Ansprüche,
**dadurch gekennzeichnet, dass**
das Adapterelement (31, 31^{I}, 31^{II}) eine scheibenartige, insbesondere ringförmige, vorzugsweise mittig wannenartig ausgestaltete, Platte ist,
die vorzugsweise für eine Anbringung an einem weiteren Getriebeteil gestaltet ist.

5. Planetenträger (1, 1^{I}) nach einem der vorhergehenden Ansprüche,
**dadurch gekennzeichnet, dass**
wenigstens eine der zwei Trägerscheiben (3, 3^{I}, 5, 5^{I}), vorzugsweise beide Trägerscheiben (3, 3^{I}, 5, 5^{I}), eine Abdeckung (41, 43) hat,
die insbesondere als Dreibein ausgestaltet, einen Zwischenraum für Zahnräder (102) des Planetengetriebes (100) schaffen.

6. Planetenträger (1, 1^{I}) nach einem der vorhergehenden Ansprüche,
**dadurch gekennzeichnet, dass**
die Trägerscheiben (3, 3^{I}, 5, 5^{I}) durch zwischen sie angeordnete Abstandshalter (61, 63, 65) Ebenen schaffen,
in denen eine Planetenzahnradebene anordenbar ist.

7. Planetenträger (1, 1^{I}) nach einem der vorhergehenden Ansprüche,
**dadurch gekennzeichnet, dass**
die erste Trägerscheibe (3, 3^{I}) und die zweite Trägerscheibe (5, 5^{I}) je eine Abdeckung (41, 43) aufweisen,
also eine erste Abdeckung (41) und eine zweite Abdeckung (43) vorhanden sind, und dass durch jede Abdeckung (41, 43) ein Abstandshalter (61, 63) geschaffen ist, vorzugsweise derart, dass sich beide Abstandshalter (61, 63) zu einem Gesamtabstand (65) ergänzen.

8. Planetenträger (1, 1^{I}) nach einem der vorhergehenden Ansprüche,
**dadurch gekennzeichnet, dass**
der Planetenträger (1, 1^{I}) Teil eines Planetengetriebes (100), insbesondere eines Stufenplanetengetriebes, ist,
und dass der Lagersitz (71) in Gestalt einer Lagersitzhülse (73) die Verbindung zwischen dem Adapterelement (31, 31^{I}, 31^{II}) und dem mittleren Bereich in dem Getrieberaum des Planetengetriebes (100) zwischen den Planeten (102) bildet.

9. Planetenträger (1, 1^{I}) nach Anspruch 8,
**dadurch gekennzeichnet, dass**
der Lagersitz (71) ein drehmomentableitendes Zwischenglied zwischen der Abdeckung (41, 43) und dem Adapterelement (31, 31^{I}, 31^{II}), insbesondere einem Adapterblech, ist.

10. Planetenträger (1, 1^{I}) nach einem der Ansprüche 5 bis 9,
**dadurch gekennzeichnet, dass**
eine Abdeckung (41, 43) und eine Trägerscheibe (3, 3^{I}, 5, 5^{I}) derart verbunden sind, sodass sie einen zwischen sich aufspannenden Hohlraum,
insbesondere für die Aufnahme von Zahnrädern (102) des Planentengetriebes (100), bilden.

11. Planetenträger (1, 1^{I}) nach einem der vorhergehenden Ansprüche,
**dadurch gekennzeichnet, dass**
zumindest eines der Teile Trägerscheiben (3, 3^{I}, 5, 5^{I}), Adapterelement (31, 31^{I}, 31^{II}) und Abdeckungen (41, 43) ein, insbesondere tiefgezogenes und/oder gestanztes, Blechteil ist.

12. Methode zur Ausleitung und/oder Verhinderung von Torsionen (150, 152, 154) in einem Planetengetriebe (100) mittels dessen Planetenträgers (1, 1^{I}),
insbesondere nach einem der vorhergehenden Ansprüche,
wodurch die Schrägstellung an übersetzenden Elementen wie Planeten (102) reduziert wird,
**dadurch gekennzeichnet, dass**
eine Torsion (150, 152, 154) in dem Planetengetriebe (100) über eine,
vorzugsweise zusätzlich vorhandene,
Stützstruktur (89),
insbesondere wenigstens eine Abdeckung (41, 43) umfassend,
auf ein parallel zum Planetenträger (1, 1^{I}) angeordnetes Ausleitelement,
wie ein Adapterblech (31, 31^{I}, 31^{II}),
ausgeleitet wird.

13. Methode nach Anspruch 12,
**dadurch gekennzeichnet, dass**
außen angeordnete Trägerscheiben (3, 3^{I}, 5, 5^{I}) über eine zwischen ihnen vorhandene Ausleitstruktur an ein Adapterblech (31, 31^{I}, 31^{II}) eine Resultierende der in die Trägerscheiben (3, 3^{I}, 5, 5^{I}) eingeleiteten Momente in einer momentenreduzierenden Art abgeben.
